# EUROPEAN PATENT APPLICATION

(11) **EP 4 841 755 A1**
(43) Date of publication of application: **18.11.2026**
(21) Application number: 25863710.7
(22) Date of filing: 29.08.2025
(51) Int. Cl.: H01M 10/6555, H01M 10/6557, H01M 10/613, H01M 10/625, H01M 50/249

(54) **BATTERY CELL ARRAY AND BATTERY PACK AND VEHICLE INCLUDING SAME**

(30) Priority: 06.09.2024 KR 20240121656
(71) Applicant: LG Energy Solution, Ltd., Seoul 07335 (KR)
(72) Inventor: OH, Kwang-Keun, Daejeon 34122 (KR); YANG, Jin-Oh, Daejeon 34122 (KR); YOO, In-Seok, Daejeon 34122 (KR)
(74) Representative: Goddar, Heinz J.
(86) International application number: PCT/KR2025/013287
(87) International publication number: WO 2026/054425

(57) **Abstract**

Disclosed is a battery cell array capable of increasing cooling efficiency, and a battery pack and a vehicle including the same, and the battery cell array includes a plurality of battery cells arranged in a column having a predetermined length, the plurality of battery cells being provided as n such columns; and a cooling tube configured to cool the plurality of battery cells and contact the plurality of battery cells to surround at least a portion of each of the plurality of battery cells, wherein the cooling tube is provided as n cooling tubes to form a one-to-one relationship with the plurality of battery cells arranged in n columns.

## Description

### TECHNICAL FIELD

The present disclosure relates to a battery cell array, and a battery pack and a vehicle including the same, and more specifically, to a battery cell array capable of increasing cooling efficiency, and a battery pack and a vehicle including the same.

This application is based on and claims priority from Korean Patent Application No. 10-2024-0121656, filed on September 6, 2024, with the Korean Intellectual Property Office, the disclosure of which is incorporated herein in its entirety by reference.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing environment friendliness and energy efficiency in that the use of fossil fuels can be reduced greatly and no byproduct is generated during energy consumption.

Secondary batteries widely used at the preset include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.5V. Therefore, if a higher output voltage is required, a plurality of battery cells may be connected in series to configure a battery pack. In addition, depending on the charge/discharge capacity required for the battery pack, a battery pack is configured by connecting a plurality of battery cells in parallel. Thus, the number of battery cells included in the battery pack may be variously set according to the required output voltage or the demanded charge/discharge capacity.

Meanwhile, to optimize performance and lifespan of a battery cell, stable cooling through effective thermal management between cells is essential. In particular, cooling technology capable of quickly and uniformly removing heat generated between cells is very important for high-density battery packs, such as electric vehicles and energy storage systems. To achieve this, a cooling tube disposed between battery cells must maximize heat transfer performance and rapidly dissipate heat. The design of the cooling tube to enhance cooling efficiency plays an important role in maintaining temperature of a battery cell uniformly and preventing overheating in a specific cell.

However, the existing cooling tube is designed to cool two columns of battery cells simultaneously, and the cooling area per cell is only about 16% of the total cell area. Due to this structural limitation, there is a problem that the cooling efficiency is low, so it is difficult to effectively control the temperature of the cell. In particular, as OEMs (Original Equipment Manufacturers) have recently strengthened the requirements for the QC (Quick Charge) performance of battery packs, the amount of heat generated from the cells has increased significantly. Accordingly, it is becoming increasingly difficult to achieve efficient heat management with the existing cooling system.

Therefore, there is a need for the development of a battery cell array structure equipped with a cooling tube that may effectively manage heat between battery cells to resolve increased heat generation and further maximize cooling efficiency.

### DISCLOSURE

### Technical Problem

Therefore, the present disclosure is directed to providing a battery cell array that may further improve cooling efficiency compared to existing battery cells, and a battery pack and a vehicle including the same.

In addition, the present invention is directed to providing a battery cell array, which may increase the cooling area ratio of a battery cell by increasing the curvature of a cooling tube, and a battery pack and a vehicle including the same.

However, the technical problems that the present disclosure seeks to solve are not limited to the above, and other problems not mentioned herein will be clearly understood by those skilled in the art from the following description.

### Technical Solution

In order to accomplish the above object, the present disclosure provides a battery cell array comprising: a plurality of battery cells arranged in a column having a predetermined length, the plurality of battery cells being provided as n such columns; and a cooling tube configured to cool the plurality of battery cells and contact the plurality of battery cells to surround at least a portion of each of the plurality of battery cells, wherein the cooling tube is provided as n cooling tubes to form a one-to-one relationship with the plurality of battery cells arranged in n columns.

Also, preferably, the cooling tube may be formed so that at least a portion thereof is interposed between at least one pair of neighboring battery cells among the plurality of battery cells.

Also, preferably, the cooling tube is formed so that at least a portion thereof is in close contact with at least one pair of neighboring battery cells among the plurality of battery cells in both directions.

Also, preferably, the cooling tube may have a contact angle of 90 degrees with at least one pair of neighboring battery cells among the plurality of battery cells.

Also, preferably, the cooling tube may include convex portions and concave portions that are repeatedly provided along an arrangement direction of the plurality of battery cells.

Also, preferably, the plurality of battery cells respectively in contact with the convex portions and the concave portions may be arranged in a column.

Also, preferably, shapes of the convex portions and the concave portions may be deformed to adjust the number of battery cells in contact.

Also, preferably, each of the convex portions and the concave portions may be configured to accommodate two battery cells.

Also, preferably, the convex portions and the concave portions may be configured to accommodate different numbers of battery cells in the arrangement direction.

Also, preferably, the cooling tube may include at least one curved portion configured to contact the battery cell; and at least one flat portion configured not to contact the battery cell

Also, preferably, the battery cell array may further comprise a heat transfer member coupled with the plurality of battery cells and configured to contact the flat portion.

Also, preferably, the cooling tube may include a recess portion configured to be at least partially in close contact with an outer circumference of at least one pair of neighboring battery cells at the same side based on an arrangement direction of the plurality of battery cells.

Also, preferably, the battery cell array may further comprise an adhesive member provided between the plurality of battery cells and the cooling tube.

The battery cell array may further comprise a side structure configured to support the plurality of battery cells and guide the cooling tube to come into close contact with the plurality of battery cells.

In addition, the present disclosure provides a battery pack comprising at least one battery cell array according to the former embodiments.

Also, the present disclosure provides a vehicle comprising at least one battery pack according to the former embodiments.

### Advantageous Effects

The battery cell array according to various embodiments of the present disclosure, as well as the battery pack and the vehicle including the same, have the effect of increasing the cooling area per battery cell to have high cooling efficiency.

In addition, the battery cell has the effect of maintaining the temperature of the battery cell at a low level by dissipating the increased heat generated due to QC (Quick Charge).

However, the effects that may be obtained through the present disclosure are not limited to the above, and other technical effects not mentioned herein will be clearly understood by those skilled in the art from the following disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram schematically showing a battery cell array according to an embodiment of the present disclosure.
FIG. 2 is a schematic enlarged view showing a portion where a cooling tube contacts a neighboring battery cell in the battery cell array according to an embodiment of the present disclosure.
FIG. 3 is a drawing for explaining a contact angle of the cooling tube in the battery cell array according to an embodiment of the present disclosure.
FIGS. 4 and 5 are drawings for explaining a contact structure between the cooling tube and the battery cell in the battery cell array according to an embodiment of the present disclosure.
FIG. 6 is a drawing for explaining a battery cell accommodation unit in the battery cell array according to an embodiment of the present disclosure.
FIG. 7 is a drawing for explaining a battery cell array another embodiment of the present disclosure.
FIG. 8 is a drawing schematically showing a contact pattern of the cooling tube in the battery cell array according to another embodiment of the present disclosure.
FIG. 9 is a drawing for explaining a battery cell array according to still another embodiment of the present disclosure.
FIG. 10 is a drawing schematically showing a contact pattern of a cooling tube in the battery cell array according to still another embodiment of the present disclosure.
FIG. 11 is a drawing for explaining a battery cell array according to still another embodiment of the present disclosure.
FIG. 12 is a drawing for explaining a battery cell array according to still another embodiment of the present disclosure.
FIG. 13 is a schematic enlarged view of a battery cell array according to still another embodiment of the present disclosure.
FIG. 14 is a drawing schematically showing a battery pack according to an embodiment of the present disclosure.
FIG. 15 is a drawing schematically showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure includes various embodiments. For each embodiment, redundant descriptions of substantially identical or similar components will be omitted, and the differences will be described.

Also, to aid understanding of the present disclosure, the attached drawings are not drawn to scale and the dimensions of some components may be exaggerated. In addition, the same reference symbols may be assigned to the same components in different embodiments.

Throughout the specification, unless stated otherwise, each element may be singular or plural.

Additionally, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

The singular expression used in this specification includes the plural, unless the context clearly dictates otherwise. In this application, terms such as "include" or "comprise" should not be construed to necessarily include all of the components or steps described in the specification, and should be construed to mean that some of the components or steps may not be included, or that additional components or steps may be included.

Throughout the specification, "A and/or B" refers to either A or B or both A and B unless expressly stated otherwise.

Meanwhile, in this specification, terms indicating directions such as "upper", "lower", "left", "right", "front", and "rear" may be used, but these terms are only for convenience of explanation, and it is obvious to those skilled in the art these terms may vary depending on the location, arrangement or orientation of a target object or the location of an observer.

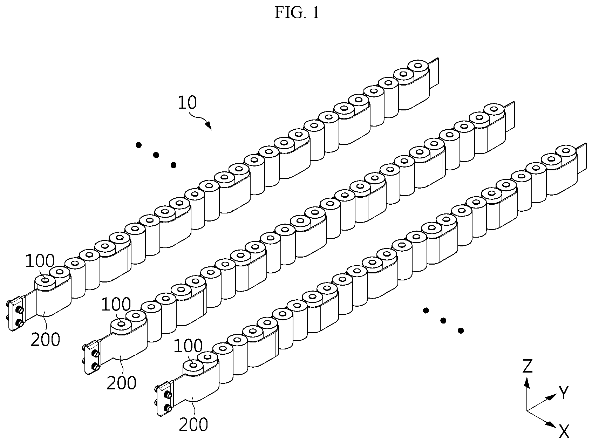

FIG. 1 is a diagram schematically showing a battery cell array 10 according to an embodiment of the present disclosure.

Referring to FIG. 1, the battery cell array 10 may include a battery cell 100 and a cooling tube 200.

Hereinafter, in each embodiment of the present disclosure, each of the plurality of battery cells 100 is described as being a cylindrical secondary battery, but the battery cell 100 of the present disclosure are not limited thereto, and may be provided as a secondary battery, such as a cylindrical secondary battery, a pouch-type secondary battery, or a rectangular secondary battery.

The cooling tube 200 is configured to cool the plurality of battery cells 100 and may contact each battery cell 100 to surround at least a portion of the battery cell 100. Accordingly, the cooling tube 200 may have a cell contact shape having a predetermined curvature for coming into contact with the plurality of battery cells 100.

In addition, the cooling tube 200 may have cooling water inlet and outlet channels for the flow of a cooling medium for effective heat management within the battery cell array 10. The cooling medium is a liquid with high heat transfer efficiency, and may be water. However, the present disclosure is not limited thereto, and one or more fluids capable of effectively exchanging heat under various conditions may be included as the cooling medium in addition to water.

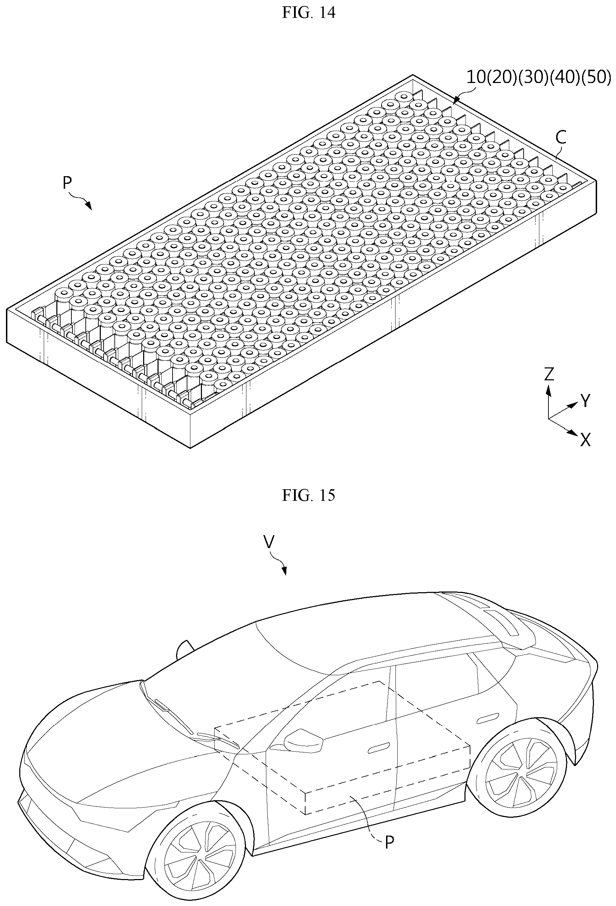

The battery cell array 10 according to an embodiment of the present disclosure may include a plurality of battery cells 100, and the battery cells 100 may be arranged in a column to optimize spatial efficiency within a battery pack P (see FIG. 14), explained later. In this way, the plurality of battery cells 100 arranged in a column may be disposed in a predetermined length suitable for accommodation within the battery pack P, and then may be arranged again in a plurality of columns using the above arrangement as a basic unit. This arrangement is designed to maximize spatial efficiency within the battery pack P and to facilitate electrical connection and heat management within the battery pack P.

The cooling tube 200 may be provided as n cooling tubes to form a one-to-one relationship with the plurality of battery cells 100 arranged in n columns. Here, n may be a natural number. In this way, in an embodiment of the present disclosure, one group of the plurality of battery cells 100 arranged in each column as the basic unit and one of the cooling tubes 200 may be assembled or coupled to form a corresponding relationship. In the prior art, a single cooling tube is used to simultaneously cool cells arranged in two columns, which causes a problem in that the cooling efficiency for each battery cell 100 is distributed. However, in this embodiment, the cooling tube 200 may form a corresponding relationship with the battery cells 100 arranged in each column and independently cool them more precisely, thereby maximizing the cooling efficiency for each battery cell 100.

Thus, the battery cell array 10 according to the present disclosure may provide an efficient and stable thermal management solution through the structure of the cooling tubes 200 corresponding in one-to-one relationship to the plurality of battery cells 100 arranged in each column.

Hereinafter, the cooling tube 200 according to an embodiment of the present disclosure will be described in more detail.

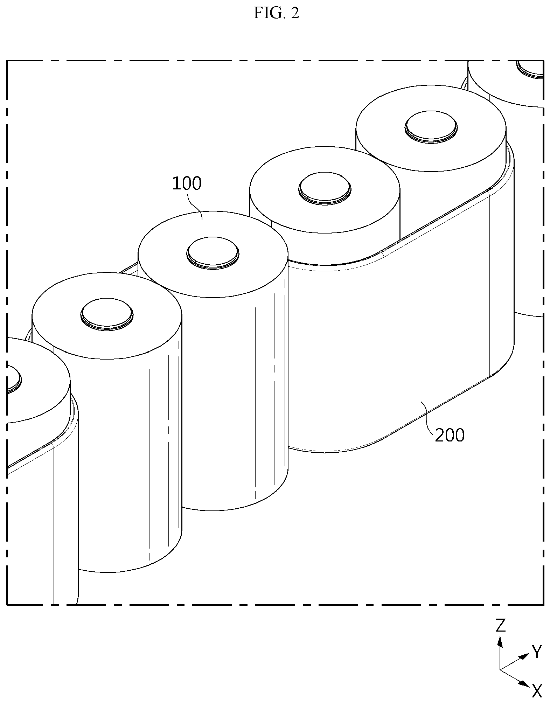

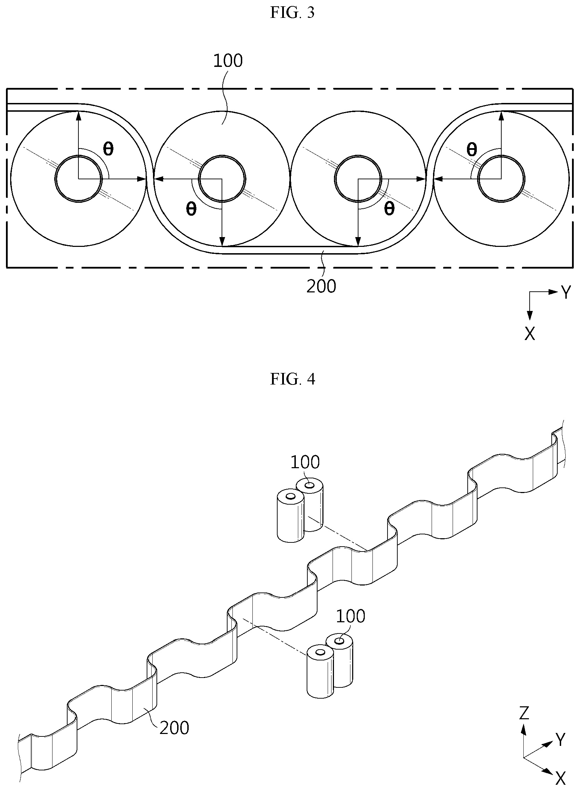

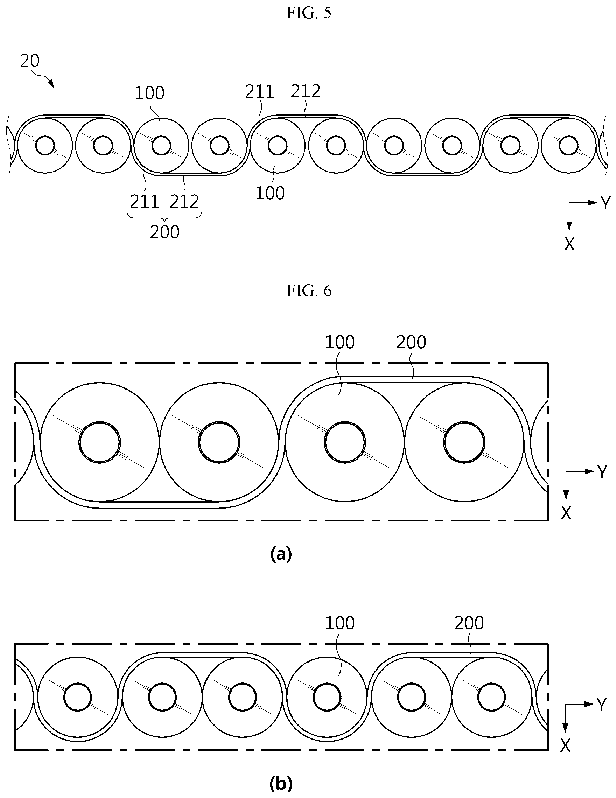

FIG. 2 is a schematic enlarged view showing a portion where a cooling tube 200 contacts a neighboring battery cell 100 in the battery cell array 10 according to an embodiment of the present disclosure, FIG. 3 is a drawing for explaining a contact angle (θ) of the cooling tube 200 in the battery cell array 10 according to an embodiment of the present disclosure, and FIGS. 4 and 5 are drawings for explaining a contact structure between the cooling tube 200 and the battery cell 100 in the battery cell array 10 according to an embodiment of the present disclosure.

Referring to FIGS. 2 to 5, the cooling tube 200 is formed to have a predetermined length required to cool the plurality of battery cells 100 arranged in each column, and may be formed to have a certain curvature in the longitudinal direction (X-axis direction) to increase cooling performance with the battery cells 100 provided as the cylindrical secondary batteries. This is to secure a larger contact area between the outer circumference of the battery cells 100, which have a cylindrical shape, and the cooling tube 200, thereby increasing cooling performance.

The cooling tube 200 may be formed so that at least a portion of the cooling tube 200 is disposed between at least one pair of neighboring battery cells 100 among the plurality of battery cells 100, so as to further increase the curvature of the cooling tube 200 and thereby expand the cooling area ratio.

At this time, the cooling tube 200 according to an embodiment of the present disclosure may be formed to be in close contact with the two neighboring battery cells 100 in both directions while a portion of the cooling tube 200 passes between the two neighboring battery cells 100. Accordingly, the cooling tube 200 is positioned as close as possible to the heat-generating area of the battery cell 100 to maximize the thermal contact area between the cooling tube 200 and the battery cell 100, thereby enabling heat exchange that occurs when the cooling medium circulates through the cooling tube 200 to be performed more efficiently.

The cooling tube 200 may be formed to have a contact angle (θ) of a certain range or greater with at least one pair of neighboring battery cells 100 among the plurality of battery cells 100.

Preferably, as shown in FIG. 3, in order to further increase the thermal contact area between the cooling tube 200 and the battery cell 100, at least one pair of neighboring battery cells among the plurality of battery cells 100 and the cooling tube 200 may be formed to have a contact angle (θ) of 90 degrees. As the cooling tube 200 is formed with the contact angle (θ) of 90 degrees, it may provide a wider contact area to the heat generation area of the battery cell 100, namely a thermal contact area expanded to about 16% to about 25% of the existing cooling area ratio, thereby contributing to further increasing heat transfer efficiency. This structure may more effectively absorb heat generated in the battery cell 100 as the cooling medium flows through the cooling tube 200.

The cooling tube 200, as shown in FIG. 4, may have a curved shape as a result of repeatedly crossing the arrangement direction of the plurality of battery cells 100 arranged in a line in each column in the transverse direction.

Specifically, the curved shape of the cooling tube 200 may be formed by an alternating arrangement of convex portions and concave portions in the longitudinal direction (X-axis direction). The alternating arrangement of convex portions and concave portions may mean that one concave portion is formed between two convex portions, and one convex portion is formed between two concave portions. The cooling tube 200 may create such a curved shape by pressurizing using a press device during the manufacturing of the cooling tube 200. That is, the convex portions and the concave portions may be alternately formed by pressurizing using the press device.

In addition, the convex portions and the concave portions may be formed to have sufficient curvature, and may be arranged to contact each other so that the entire battery cell 100 may be stably accommodated in each portion. This structure may increase the close contact between the battery cell 100 and the cooling tube 200, thereby maximizing heat transfer efficiency. That is, the convex portions and the concave portions may be configured to surround the battery cell 100 as if the battery cell 100 is accommodated more deeply, so that the wider outer circumference of the battery cell 100 and the cooling tube 200 may come into closest contact as possible. This may effectively absorb heat generated from the battery cell 100 and quickly release heat through the cooling tube 200, thereby significantly improving the thermal management performance of the battery cell array 10.

At this time, preferably, since the plurality of battery cells 100, which are in contact with the convex portions and the concave portions, respectively, are arranged in a column to form a straight line, even when the plurality of battery cells 100 are arranged in n columns, the plurality of battery cells 100 in each column may be configured to maintain optimal space efficiency and density within the battery pack P by the straight line arrangement.

The cooling tube 200, as shown in FIG. 5, is formed to have a predetermined length required to cool the plurality of battery cells 100 arranged in each column, and may be formed to have a certain curvature in the longitudinal direction (X-axis direction) according to the alternating structure of the convex portions and the concave portions so as to increase cooling performance with the battery cells 100 provided as the cylindrical secondary batteries.

In addition, the cooling tube 200 may include at least one curved portion 211 having a predetermined curvature that is in contact with the battery cell 100 and at least one flat portion 212 that is not in contact with the battery cell 100.

The curved portion 211 is a portion that directly performs heat exchange through contact with the battery cell 100, and may be formed so that the curved surface of the cooling tube 200 is in close contact with the outer surface, namely the outer circumference, of the battery cell 100. This structural characteristic may maximize the heat transfer area, thereby efficiently transferring the heat generated from each battery cell 100 to the cooling tube 200.

The flat portion 212 is a portion where the cooling tube 200 does not directly contact the battery cell 100, and an empty space may be formed between the battery cell 100 and the flat portion 212. The empty space forms a certain air layer between the battery cell 100 and the flat portion 212, and due to this structure, it is possible to provide a path through which a cooling medium may freely circulate inside the cooling tube. Due to this, the cooling medium may efficiently flow through the flat portion 212 inside the cooling tube 200, and the efficiency of heat exchange may be increased. In particular, this relatively flat path may enable smooth circulation without obstructing the flow of the cooling medium, thereby improving the overall heat transfer performance.

In addition, the empty space may help to evenly distribute the heat of the battery cell 100 and may help to control the thermal conductivity of the cooling tube 200. In addition, the empty space between the flat portion 212 and the battery cell 100 may provide a buffering effect against thermal contraction and expansion and may contribute to relieving mechanical pressure or stress that may occur during the installation and removal of the cooling tube 200.

In this way, the empty space between the flat portion 212 and the cooling tube 200 may make the structural design of the cooling tube 200 more flexible, thereby ensuring effective and stable operation of the battery cell array 20.

FIG. 6 is a drawing for explaining an accommodation unit for the battery cell 100 in the battery cell array 10 according to an embodiment of the present disclosure.

The cooling tube 200 may include convex portions and concave portions of various shapes designed to optimize the thermal contact area with the battery cell 100, as shown in FIG. 6.

Specifically, each of the convex portions and the concave portions of the cooling tube 200 may have a structure in which the number of battery cells 100 in contact is implemented in various ways. For example, the convex portions and the concave portions may be formed to accommodate the same number of battery cells 100, or may be formed to accommodate different numbers of battery cells 100. Accordingly, one, two, three or more battery cells 100 may be formed to come into contact with the convex portion and the concave portion, depending on the arrangement of the battery cells 100. For example, the convex portion may be formed to allow only one battery cell 100 to come into close contact with the convex portion, or to allow two battery cells 100 to come into contact with the convex portion at the same time, and the concave portion may provide sufficient space to contact and accommodate three or more battery cells 100 together. These various contact configurations maximize the thermal contact area depending on the arrangement of the battery cells 100 and contribute to effectively dissipating the heat generated from each battery cell 100, which may significantly improve the overall thermal management performance of the battery cell array 10.

In addition, the cooling tube 200 may be formed so that the battery cells 100 are regularly or irregularly contacted at these portions. For example, the cooling tube 200 may be formed to accommodate two battery cells 100 in each of the convex portion and the concave portion (a), or may be configured to accommodate different numbers of battery cells 100 in the arrangement direction, such that one battery cell 100 is accommodated in the convex portion and two battery cells 100 are accommodated in the concave portion (b).

The structure of the cooling tube 200, in which the number of battery cells 100 in contact is implemented in various ways, may be formed in a fixed or adjustable form designed according to the cooling requirements and the arrangement of the plurality of battery cells 100. Specifically, the convex portions and concave portions of the cooling tube 200 may be designed in various shapes and sizes.

Specifically, these structural features may be implemented in various ways.

First, the cooling tube 200 may be formed with a fixed structure for a specific battery cell arrangement. In this case, the convex portion and the concave portion are manufactured in a predetermined position and size to fit the pre-designed arrangement of the battery cells 100, so that only a specific number of battery cells 100 may be in contact with the cooling tube 200 at a predetermined position. For example, the convex portion may be fixedly formed in a shape such that only one battery cell 100 may be in contact, and the concave portion may be fixedly formed to have a depth or curvature such that two or more battery cells 100 may be in contact simultaneously. Such a fixed structure may allow a simple manufacturing process and be suitable for repetitive arrangement.

In addition, the cooling tube 200 may be formed into a flexible structure that is adjustable according to the change in the arrangement of the plurality of corresponding battery cells 100. In this case, the convex portion and the concave portion may be formed of relatively flexible materials or a modular design, so that the user may arbitrarily adjust the number of battery cells 100 that contact the convex portions and the concave portions as needed. For example, if the cooling tube 200 is made of an elastic material or a thermoplastic resin, the position or size of the convex portions and the concave portions may be adjusted according to the size and arrangement of the battery cells 100 to contact various numbers of battery cells 100. In addition, in a modular design, the number of battery cells in contact in a specific area may be adjusted by replacing or rearranging individual components of the cooling tube 200. This flexible structure may respond to various arrangements of the battery cells 100 of various sizes and shapes, and may provide an optimal thermal contact area according to cooling requirements.

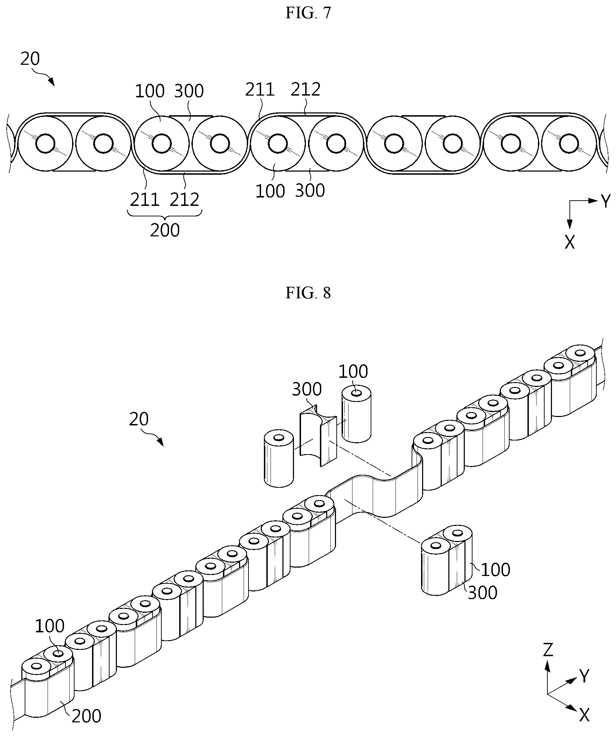

FIG. 7 is a drawing for explaining a battery cell array 20 another embodiment of the present disclosure, and FIG. 8 is a drawing schematically showing a contact pattern of the cooling tube 200 in the battery cell array 20 according to another embodiment of the present disclosure.

Referring to FIGS. 7 and 8, the battery cell array 20 may include the battery cells 100, the cooling tube 200, and a heat transfer member 300.

The heat transfer member 300 may be configured to be coupled with at least one pair of neighboring of battery cells 100 and to be in contact with the flat portion 212 of the cooling tube 200.

The heat transfer member 300 may be made of a material with excellent thermal conductivity and configured to effectively transfer heat generated from the battery cell 100 to the cooling tube 200. Such a material has high thermal conductivity to quickly transfer heat, and may help heat to be quickly transferred from the battery cell 100 to the cooling tube 200.

The heat transfer member 300 may be precisely shaped to maximize heat transfer efficiency. For example, the heat transfer member 300 may be formed to completely fill the empty space between the flat portion 212 and the battery cell 100. This shape may utilize the properties of the thermally conductive material to the maximum to ensure that heat is uniformly transferred through the heat transfer member 300. In addition, the heat transfer member 300 may contribute to increasing the contact area between the battery cell 100 and the cooling tube 200 and optimizing the heat transfer path.

In addition, the surface treatment and shape of the heat transfer member 300 may further improve thermal conductivity. For example, by forming fine protrusions or patterns on the surface of the heat transfer member 300, the contact area between the battery cell 100 and the cooling tube 200 may be increased, and the heat conduction path may be established more effectively. Such surface treatment contributes to improving heat transfer performance, and may maximize heat exchange efficiency by maximizing thermal contact between the battery cell 100 and the cooling tube 200.

Hereinafter, the shape and coupling process of the heat transfer member 300 according to this embodiment will be described in detail.

As shown in FIGS. 7 and 8, the heat transfer member 300 may be formed to maximize the thermal contact area between the battery cell 100 in the form of a cylindrical battery and the cooling tube 200. The heat transfer member 300 is formed to surround the outer circumference of the battery cell 100 and may include a concave portion for close contact and coupling with the battery cell 100. This concave portion has a structure that is in close contact with the cylindrical outer circumference of the battery cell 100 and may directly transfer heat generated in the battery cell 100 to the heat transfer member 300.

Seeing this process in detail, when the battery cell 100 is coupled to the concave portion of the heat transfer member 300, the outer circumference of the battery cell 100 comes into close contact with the inner concave surface of the heat transfer member 300. The heat transfer member 300 is arranged around the battery cell 100 and comes into contact with the outer circumference of the battery cell 100 over a maximum area to efficiently absorb and conduct heat generated from the battery cell 100.

The heat transfer member 300 has concave portions at both sides, so that two battery cells 100 may be coupled to each concave portion. As a result, the heat transfer member 300 may be coupled to two battery cells 100 at both sides simultaneously. The battery cells 100 may be fixed or attached to the concave portions of the heat transfer member 300 to form a single unit as a whole and be brought into contact with the cooling tube 200.

The heat transfer member 300 and the battery cell 100 in a coupled state may be assembled to be in close contact with the curved portion 211 and the flat portion 212 of the cooling tube 200 as a whole. That is, the heat transfer member 300 comes into direct contact with the flat portion 212 of the cooling tube 200, and the battery cell 100 comes into contact with the curved portion 211 that is bent to be in close contact with the outer circumference of the battery cell 100, thereby providing a maximum thermal contact area between the outer circumference of the battery cell 100 and the surface of the cooling tube 200.

Therefore, the heat generated in the battery cell 100 is effectively transferred to the cooling tube 200 directly or through the heat transfer member 300, and may be quickly released through the cooling medium circulating inside the cooling tube 200.

This structural design is configured to maximize cooling efficiency by quickly transferring heat generated from the battery cell 100 to the cooling tube 200 directly or indirectly. The coupled structure of the cylindrical battery cell 100 and the heat transfer member 300 having a concave portion and the process of the coupled structure coming into contact with the cooling tube 200 may improve the thermal management performance of the battery cell array 20 and ensure stable and efficient battery operation.

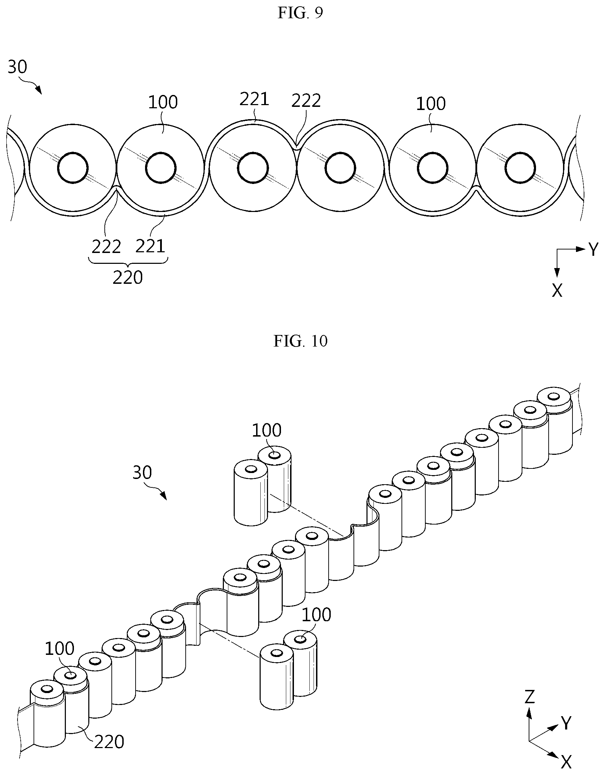

FIG. 9 is a drawing for explaining a battery cell array 30 according to still another embodiment of the present disclosure, and FIG. 10 is a drawing schematically showing a contact pattern of a cooling tube 220 in the battery cell array 30 according to still another embodiment of the present disclosure.

Referring to FIGS. 9 and 10, the battery cell array 30 may include the battery cells 100 and the cooling tube 220. The cooling tube 220, like the cooling tube 200 (see FIG. 5) of the former embodiment, is formed to have a predetermined length required to cool the plurality of battery cells 100 arranged in each column, and may be formed to have a predetermined curvature in the longitudinal direction (X-axis direction) to increase cooling performance with the battery cells 100 provided as cylindrical secondary batteries.

In addition, the cooling tube 220 may include a plurality of curved portions 221 that are in close contact with the battery cell 100 and a plurality of recess portions 222 that are formed between the plurality of curved portions and are in at least partial contact with the battery cell.

The curved portion 221 is a portion that directly transfers heat through contact with the battery cell 100, and may be formed to come into close contact with the outer surface, namely the outer circumference, of the battery cell 100. This structural characteristic maximizes the heat transfer area, thereby efficiently transferring heat generated from each battery cell 100 to the cooling tube 220.

The curved portion 221 is in close contact with the heat generating area of the battery cell 100, and thus may contribute to effectively dissipating the heat generated from each battery cell 100. This close contact design increases heat transfer efficiency and allows the cooling medium to more effectively absorb and cool heat.

The recess portion 222 is a portion in the cooling tube 220 that at least partially contacts the battery cell 100, and may be configured to be in close contact with at least a portion of the outer circumference of at least one pair of neighboring battery cells 100 located at the same side based on the arrangement direction of the battery cell 100. In other words, when the cooling tube 220 is configured to simultaneously surround and contact two or more battery cells 100, the cooling tube 220 may be formed to reduce or fill an empty space between the cooling tube 220 and the neighboring battery cells 100.

To this end, the shape of the recess portion 222 may be precisely formed to come into close contact with the cylindrical outer circumference of the battery cell 100 and provide an optimal heat transfer path. This recess portion 222 may be formed to have a smoothly curved shape corresponding to the outer curvature of the battery cell 100. In addition, the cooling tube 220 may be made of a flexible material so that the user may arbitrarily adjust the cooling tube 220 to come into close contact with the space between the neighboring battery cells 100. Through this, the recess portion 222 may maximize heat transfer efficiency by creating a minimum gap between the curved surface of each battery cell 100 and the inner surface of the cooling tube 220.

Thus, the heat generated from the battery cell 100 is transferred not only to the curved portion 221 of the cooling tube 220, but also to the recess portion 222 of the cooling tube. Such a heat transfer path may contribute to more uniform heat distribution between the battery cells 100 and prevention of local thermal overload by providing a wider thermal contact area with the outer circumference of the battery cell 100 through the recess portion 222.

In addition, since the recess portion 222 is formed so that the curvature of the recess portion 222 matches the shape of the outer surface of the battery cell 100, the cooling tube 220 may firmly fix the plurality of battery cells 100 and maintain a structurally stable coupling state even under external impact or vibration. Through this, the battery cells 100 may be fixed in place without shaking, and reliable thermal management performance may be maintained even over long periods of use.

This structural design maximizes the thermal contact area so that the heat generated from the battery cell 100 may be directly and quickly transferred to the cooling tube 220, thereby improving the thermal management performance of the battery cell array 30 and ensuring stable and efficient battery operation.

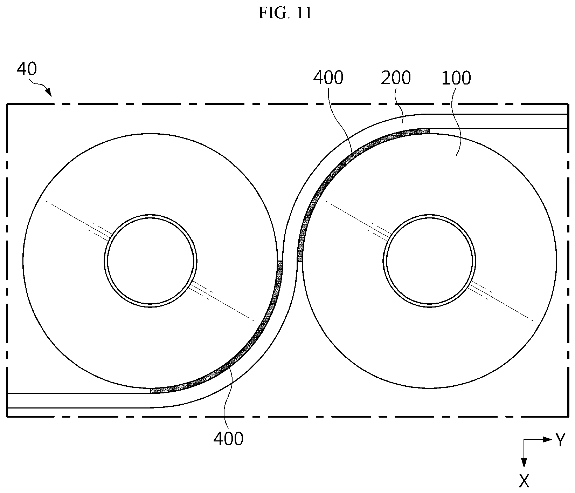

FIG. 11 is a drawing for explaining a battery cell array 40 according to still another embodiment of the present disclosure.

Referring to FIG. 11, the battery cell array 40 may include the battery cell 100, the cooling tube 200, and an adhesive member 400. The adhesive member 400 may guide the battery cell 100 to be more securely attached to the inner surface of the cooling tube 200.

The adhesive member 400 may be made of a material with excellent thermal conductivity so as to effectively transfer heat generated from the battery cell 100 to the cooling tube 200. The adhesive member 400 may be primarily made of a silicone-based, epoxy-based, or polyurethane-based thermally conductive adhesive, each of which has its own unique properties and advantages. For example, a silicone-based adhesive has excellent flexibility and electrical insulation properties, and an epoxy-based adhesive provides strong adhesion and chemical resistance, allowing for stable performance in various environments. In addition, a polyurethane-based adhesive has excellent flexibility and shock absorption properties, which is suitable for absorbing stress caused by thermal expansion and contraction of the battery cell 100. Through this, the heat generated from the battery cell 100 may be effectively transferred and dissipated to the cooling tube 200 through the adhesive member 400.

In addition, the shape of the adhesive member 400 may be formed to maximize the close contact between the battery cell 100 and the cooling tube 200, and for this purpose, the adhesive member 400 may be provided in the form of a thin and flexible film, an adhesive layer, or a pad. The adhesive member 400 may be evenly arranged between the battery cell 100 and the cooling tube 200 without at least a partial empty space, thereby maximizing heat transfer efficiency and minimizing thermal resistance of the adhered portion.

In addition, the adhesive member 400 acts as a buffer between the battery cell 100 and the cooling tube 200, thereby preventing damage to the plurality of battery cells 100 due to external shock or vibration and improving overall structural stability.

Thus, the adhesive member 400 may play a role in strengthening the physical coupling between the battery cell 100 and the cooling tube 200, while improving the overall thermal management performance of the battery cell array 40.

Meanwhile, the adhesive member 400 may also be provided between the battery cell 100 and the cooling tube 200 of the battery cell array 20 of the former embodiment (see FIGS. 7 and 8), and between the battery cell 100 and the cooling tube 220 of the battery cell array 30 of the former embodiment (see FIGS. 9 and 10).

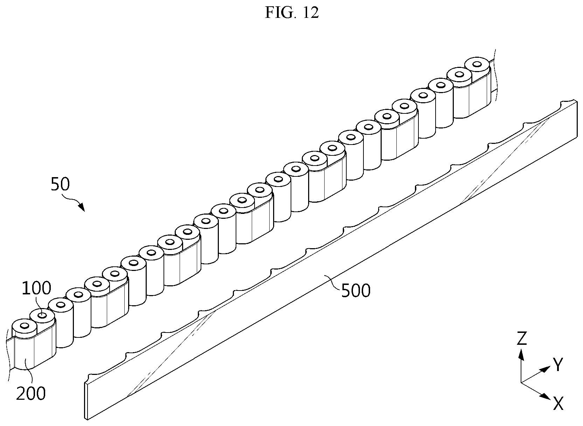

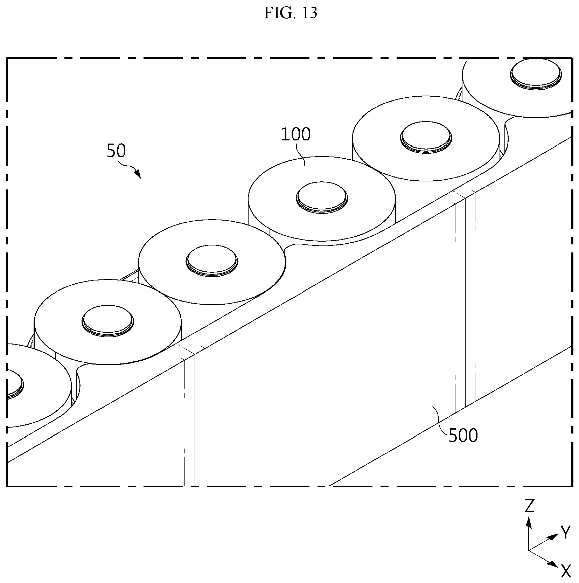

FIG. 12 is a drawing for explaining a battery cell array 50 according to still another embodiment of the present disclosure, and FIG. 13 is a schematic enlarged view of a battery cell array 50 according to still another embodiment of the present disclosure.

Referring to FIGS. 12 and 13, the battery cell array 50 may include the battery cell 100, the cooling tube 200, and a side structure 500.

The side structure 500 may be configured to stably maintain the position of the battery cell 100 within the battery cell array 50 and to support the cooling tube 200 to come into closer contact with the battery cell 100. That is, the side structure 500 may minimize the gap between the battery cell 100 and the cooling tube 200 to maximize heat transfer efficiency and to quickly transfer the heat of the battery cell 100 to the cooling tube 200.

Structurally, the side structure 500 may be formed to closely contact and support the cooling tube 200, which is arranged to surround and contact the outer circumference of the battery cell 100, at the side surface. This close contact structure maximizes the heat transfer performance of the cooling tube 200, 220 and minimizes the air layer between the outer circumference of the battery cell 100 and the cooling tube 200, thereby reducing the thermal resistance in the heat transfer path.

In addition, the side structure 500 may contribute to increasing the durability and stability of the battery cell array 50. For example, the side structure 500 may firmly fix the battery cell 100 so that the battery cell 100 does not move even when vibration or external impact is applied thereto, which allows the battery pack P (see FIG. 14), explained later, to maintain high stability even when used for a long period of time. In addition, the shape of the side structure 500 may facilitate the overall arrangement and assembly process of the battery cell array 50, thereby contributing to reducing the manufacturing costs and improving productivity.

FIG. 14 is a drawing schematically showing a battery pack according to an embodiment of the present disclosure, and FIG. 15 is a drawing schematically showing a vehicle according to an embodiment of the present disclosure.

Referring to FIGS. 14 and 15, the battery pack P according to an embodiment of the present disclosure may include at least one battery cell array 10, 20, 30, 40, 50 according to the former embodiments and a pack case C that accommodates the battery cell array 10, 20, 30, 40, 50.

The battery pack P according to an embodiment of the present disclosure may further include various other components of the battery pack P known at the time of filing of this application. For example, the battery pack P according to an embodiment of the present disclosure may further include components such as a current sensor, a fuse, and a service plug.

In addition, the vehicle V according to an embodiment of the present disclosure may include at least one battery pack P according to the present disclosure. In addition to the battery pack P, the vehicle V according to an embodiment of the present disclosure may further include various other components included in a vehicle. For example, the vehicle V according to an embodiment of the present disclosure may further include a body, a motor, a control device such as an ECU (electronic control unit), etc., in addition to the battery pack P according to an embodiment of the present disclosure.

In addition, it is also possible that the battery pack P according to an embodiment of the present disclosure is equipped in other devices, instruments, and facilities, such as an energy storage system that uses a secondary battery, in addition to the vehicle V.

According to various embodiments as described above, it is possible to provide a battery cell array 10, 20, 30, 40, 50 having a cooling tube 200, 220 that may increase the cooling area for each battery cell 100 to have high cooling efficiency, and a battery pack P and a vehicle V including the same.

In addition, according to various embodiments as described above, it is possible to provide a battery cell array 10, 20, 30, 40, 50 having a cooling tube 200, 220 capable of dissipating the increased heat generated due to QC (Quick Charge) and maintaining the temperature of the battery cell 100 at a low level, and a battery pack P and a vehicle V including the same.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

10, 20, 30, 40, 50: battery cell array
100: battery cell
200: cooling tube
211: curved portion
212: flat portion
220: cooling tube
221: curved portion
222: recess portion
300: heat transfer member
400: adhesive member
500: side structure
P: battery pack
C: pack case
V: vehicle

## Claims

1. A battery cell array comprising:
a plurality of battery cells arranged in a column having a predetermined length, the plurality of battery cells being provided as *n* such columns; and
a cooling tube configured to cool the plurality of battery cells and contact the plurality of battery cells to surround at least a portion of each of the plurality of battery cells,
wherein the cooling tube is provided as n cooling tubes to form a one-to-one relationship with the plurality of battery cells arranged in n columns.

2. The battery cell array according to claim 1,
wherein the cooling tube is formed so that at least a portion thereof is interposed between at least one pair of neighboring battery cells among the plurality of battery cells.

3. The battery cell array according to claim 1,
wherein the cooling tube has a contact angle of 90 degrees with at least one pair of neighboring battery cells among the plurality of battery cells.

4. The battery cell array according to claim 1,
wherein the cooling tube includes convex portions and concave portions that are repeatedly provided along an arrangement direction of the plurality of battery cells.

5. The battery cell array according to claim 4,
wherein the plurality of battery cells respectively in contact with the convex portions and the concave portions are arranged in a column to form a straight line.

6. The battery cell array according to claim 4,
wherein shapes of the convex portions and the concave portions are deformed to adjust the number of battery cells in contact.

7. The battery cell array according to claim 4,
wherein each of the convex portions and the concave portions is configured to accommodate two battery cells.

8. The battery cell array according to claim 4,
wherein the convex portions and the concave portions are configured to accommodate different numbers of battery cells in the arrangement direction.

9. The battery cell array according to claim 1,
wherein the cooling tube includes:
at least one curved portion configured to contact the battery cell; and
at least one flat portion configured not to contact the battery cell.

10. The battery cell array according to claim 9, further comprising:
a heat transfer member coupled with the plurality of battery cells and configured to contact the flat portion.

11. The battery cell array according to claim 1,
wherein the cooling tube includes a recess portion configured to be at least partially in close contact with an outer circumference of at least one pair of neighboring battery cells at the same side based on an arrangement direction of the plurality of battery cells.

12. The battery cell array according to claim 1, further comprising:
an adhesive member provided between the plurality of battery cells and the cooling tube.

13. The battery cell array according to claim 1, further comprising:
a side structure configured to support the plurality of battery cells and guide the cooling tube to come into close contact with the plurality of battery cells.

14. A battery pack comprising at least one battery cell array according to any one of claims 1 to 13.

15. A vehicle comprising at least one battery pack according to claim 14.
